## Europäisches Patentamt

## European Patent Office

## Office européen des brevets

(11) Publication number: **0 265 011**
**B1**

# EUROPEAN PATENT SPECIFICATION

(45) Date of publication of patent specification: **23.01.91**

(51) Int. Cl.⁵: **G 06 F 3/00, G 09 B 21/00**

(21) Application number: **87201959.1**

(22) Date of filing: **12.10.87**

(54) Inputting device with tactile feedback.

(30) Priority: **20.10.86 NL 8602624**

(43) Date of publication of application:
**27.04.88 Bulletin 88/17**

(45) Publication of the grant of the patent:
**23.01.91 Bulletin 91/04**

(84) Designated Contracting States:
**DE FR GB IT NL SE**

(56) References cited:
**GB-A-2 166 627**

**IBM TECHNICAL DISCLOSURE BULLETIN, vol. 28, no. 3, August 1985, pages 1343-1344, New York, US; "Seeing eye mouse"**

**IEEE TRANSACTIONS ON MAN-MACHINE SYSTEMS, vol. MMS-11, no. 1, March 1970, pages 58-65; J.C. BLISS et al.: "Optical-to-tactile image conversion for the blind"**

(73) Proprietor: **Océ-Nederland B.V.**
**St. Urbanusweg 43**
**NL-5914 CC Venlo (NL)**

(72) Inventor: **Mees, Martine**
**Kolk 94**
**NL-3011 MD Rotterdam (NL)**
Inventor: **Valkenhoff, Andries Herman**
**Van den Boschstraat 269**
**NL-2595 AD Den Haag (NL)**

(74) Representative: **Hanneman, Henri W.A.M. et al**
**Océ-Nederland B.V. Patents and Information**
**Postbus 101**
**NL-5900 MA Venlo (NL)**

(56) References cited:
**MEDICAL AND BIOLOGICAL ENGINEERING, vol. 14, no. 7, July 1976, pages 451-454; HIDETO: "Vibrotactile stimulation by using both the electrical and mechanical stimuli"**

Courier Press, Leamington Spa, England.

## Description

This invention relates to a system comprising a computer, a display unit comprising a screen, and an inputting device for selection of specific areas on the screen and for moving a cursor on said screen, the inputting device being coupled to the computer in which there is at least one screen-controlled program (interactive program), a program seeing to it that selectable elements are displayed on the screen at places corresponding to the specific areas, and it being possible to bring the cursor to a selectable element by means of the inputting device, so that a sub-program symbolized by said element can be selected by operating a selection key on the inputting device, the inputting device further comprising a tactile element to output information.

A system of this kind is used in many places where information has to be processed on a screen, for example in CAD systems, word processors, or graphic workstations. Systems of this kind operate with menu-controlled programs in which a number of commands selectable at a given time in the program are displayed at a special place on the screen. The use can move a cursor over the screen by means of an inputting system, and if the cursor is placed on a command or icon that command can be selected. The inputting unit is frequently a so-called "mouse" coupled ot the computer system. By moving the mouse over a flat surface the cursor can be positioned to any required place on the screen. The mouse is also provided with one or more press-buttons for selection of a command. If the cursor position coincides with the position where a command is displayed pressure on the bottom will start the sub-program to be performed under that command. This subprogram may, for example, provide a new menu display or a so-called pop-up menu. Such a mouse, further involving tactile perception of screen contents for the blind, is known from the disclosure of IBM, TDB, Vol. 28, No. 3, pages 1343—1344, dated Aug. 85.

Using such mouse-controlled menu programs requires high concentration visually of the user. Particularly if the areas for selection are small, it is rather difficult to get the cursor exactly in the required area and to actuate the selection button at the correct moment.

The object of the invention is accordingly to provide a system according to the preamble in which this disadvantage is obviated. According to the invention, this object is attained in a system according to the preamble, in that when the position of the cursor coincides with the position of a selectable element the computer delivers a signal to the inputting device, said output tactile element being activated in response to said signal and in that the tactile element is disposed in a selection key.

Tactile feedback makes use of the touch receptors and/or pressure receptors in the hand, so that the amount of attention required particularly for the central part of the field of view of the eyes can be relieved. This means a more balanced distribution of the offered information over the various senses. Although extra attention is called for on the part of the touch receptors in the fingers, the intensively used eyes wii! become less tired and the total strain will be reduced when using the system.

The use of the simultaneous feedback of visual and tactile information also results in a form of redundancy which benefits the error-sensitivity of the mouse usage. Reaction time can also be reduced by the tactile feedback. Thus tactile feedback eliminates retinal delay, which is involved when the visual channels are used. With the skin receptors there is a more rapid transmission of information to the brain. Tactile feedback can also result in a kind of reflex on the following lines: tactile element moves—actuate button, so that relatively rapid response times can be obtained.

In the inputting of commands with which the situation on the screen changes considerably, it is sometimes necessary for the user to wait until the prompt re-appears as an indication that the information has been processed and the screen adjusted. This necessary wait is also due to the fact that the software for the image processor which is responsible for refreshing the screen requires some time to process new information. If the user receives a tactile signal at the instant that the information has been processed, but before the instant that the information processing for screen refreshment has started, the waiting time can be saved because the user can continue operations before the screen is refreshed.

These and other advantages of the invention will be explained with reference to the drawings wherein:

Fig. 1 is an embodiment of a mouse as used in a system according to the invention,

Fig. 2a to f show the use of said mouse,

Figs. 3a and b show the use of the mouse in selecting one pixel thick lines and

Figs. 4a en b represent a diagram showing the principle of a tactile element as used in a system according to the invention.

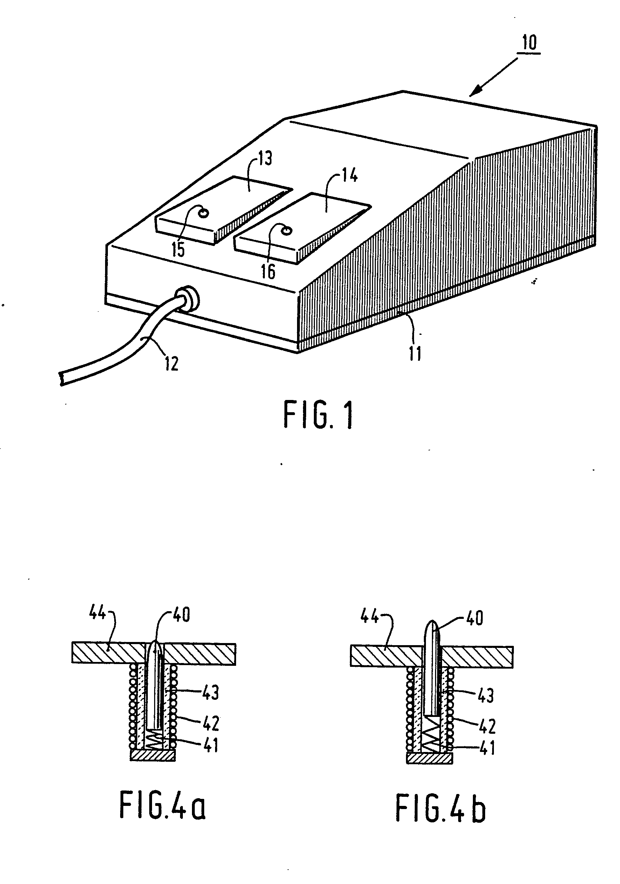

Fig. 1 shows an inputting device of the system according to the invention. This inputting device or mouse 10 has a baseplate 11, the base of which is provided with sensors which, when the mouse is moved over a flat surface, casue the cursor on the screen to move in a corresponding direction. The mouse is connected by a cord 12 to a computer in which an inter-active program is running. The mouse has two press-buttons (selection keys) 13, 14, the operation of which will be described hereinafter. Each button contains a tactile element 15 and 16 respectively in the form of a pin which under certain conditions can project slightly above the top of the botton.

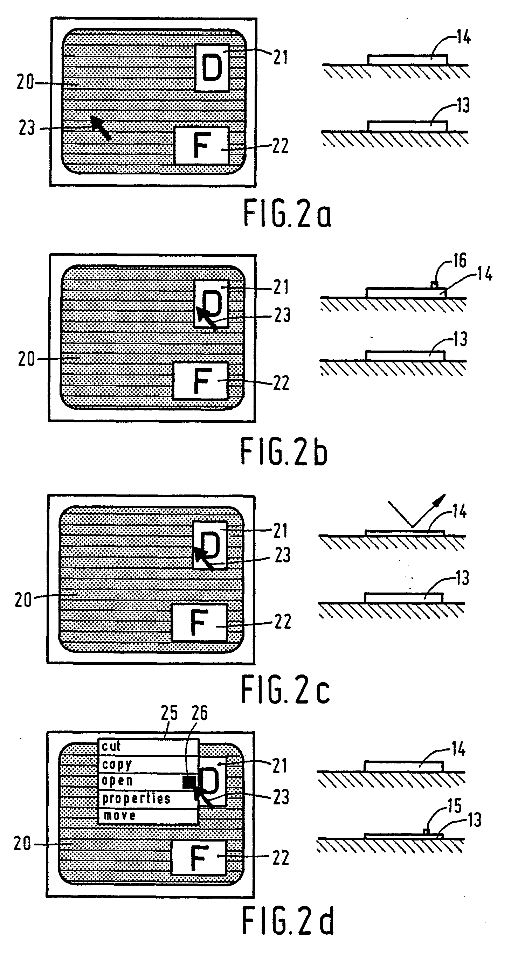

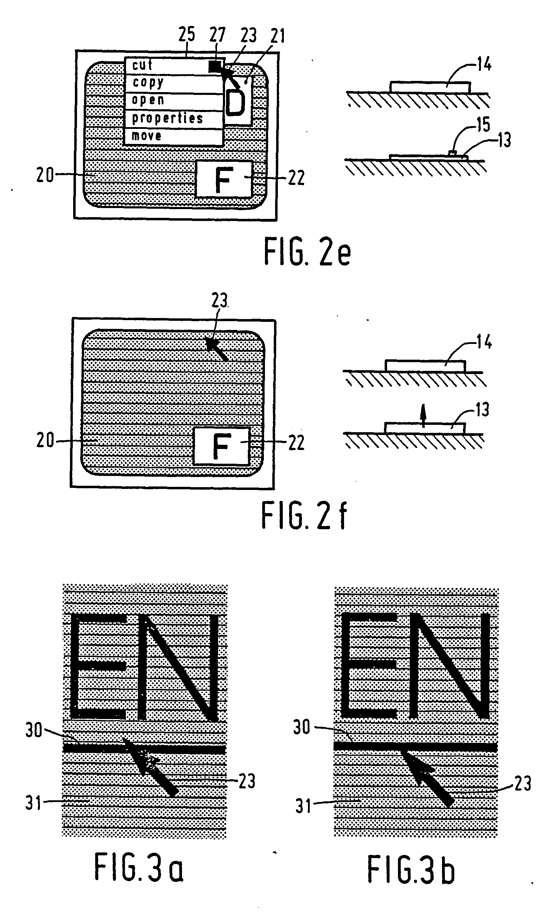

The operation of this mouse will be described in detail with reference to Figs. 2a to 2f. In Fig. 2a, two specific areas 21, 22 for selection are shown on a screen 20. A cursor 23 in the form of a small arrow is also situated on this screen. Next to this screen 20 the buttons 14 and 13 of the mouse are shown diagrammatically in their initial positions. By moving the mouse in the correct direction the cursor 23 is brought to the area 21 for selection. The user's fingers rest on the buttons 14, 13. When the tip of the cursor 23, i.e. the hot spot, enters the area 21 for selection (Fig. 2b) the tactile element 16 in button 14 rises and signals to the user that the area 21 has been reached. The user then presses button 14 down (Fig. 2c) in order to select the field symbolized by area 21. After selection the user allows the button 14 to rise. By then pressing in the button 13 (Fig. 2d) it is possible to call up a so-called pop-up menu 25 which shows a number of possible operations to be performed on area 21. The cursor jumps to a standard position (default position) in this menu ('OPEN'). The tactile element 15 of button 13 rises when the button 13 is pressed in. As long as button 13 is pressed in, the pop-up menu 25 is visible on the screen 20. The cursor 23 can be brought to a different position in the menu by moving the mouse in order to select a different command required. If the cursor 23 is brought to the command 'CUT' (Fig. 2e), the tactile element 15 will go down just before the cursor leaves a command, and then rises again when entering the next command. If the button 13 is released (Fig. 2f) after reaching the command 'CUT' 27, this command is performed on the selected area 21 so that area 21 disappears from the screen 20. The tactile element 15 descends again beneath the surface of the button 13.

When a command of this kind is performed, in the situation as shown in Fig. 2a the cursor 23 can be moved towards the area 21 without intensive use of the eyes. All that is necessary is for the user to know the overall screen layout to be able to perform a positioning movement of this kind, since he can rely on information from the peripheral area of the eyes and the tactile feedback when area 21 is reached. Thus there is no need for the user to fix this attention on cursor 23 and follow it. Once the situation is reached as shown in Fig. 2b, the user can react automatically by immediately pressing in the button where the tactile element is perceptible so that the selection of the relevant command takes place.

After the pop-up menu has been called up, giving the situation shown in Fig. 2d, a user familiar with this pop-up menu can basically find the command 'CUT' blindly. He knowns that as soon as the pop-up menu has been called up the tactile element in button 13 becomes perceptible in the default position (pre-set command) and that there must then be another two perceptible stimuli on the upward movement of the cursor 23 before the command 'CUT' is reached. If after calling up the pop-up menu the user for the third time feels the tactile element against his finger (OPEN-COPY-CUT) then the situation shown in Fig. 2e has been reached and by releasing the button 13 he can activate the command 'CUT' to give the situation shown in Fig. 2f.

The tactile feedback is particularly important if, for example, it is necessary to select a frame line having a thickness of one pixel. Fig. 3a and b show the line 30 for selection displayed on a screen 31. Just one pixel of the cursor 23 (the extreme tip of the arrow in this case) governs the position of the cursor 23 as recorded by the computer and this one pixel must come exactly on the one-pixel thick line 30. Selection by means of a tactile feedback takes place by moving the cursor in the direction of the required object. When it becomes perceptible that the cursor is on the frame line 30, an immediate response is possible by pressing in the button is which the tactile element becomes perceptible, so that the object can be selected with great accuracy.

Figs. 4a and b represent a diagram showing the principle of a tactile element as used in the invention. A pin 40 is disposed on a compression spring 41 in a button 44. The pin 40 is of magnetizable material. Disposed around the pin 40 is core 43 with a coil 42 therearound. By passing a d.c. through the coil the pin 40 remains in the core and hence beneath the surface of the button 44. By (temporarily) disconnecting the current the spring 41 presses the pin 40 out of the surface of the button 44.

A large number of embodiments are possible to give the same effect as described above using electromagnetism. For example, the spring 41 can be replaced by a leaf spring or the pin can be constructed as a hinged construction. The framing can also be such that the pin is raised if the coil is energized.

Another embodiment of the tactile element can be obtained by means of a piezoelectric element. This comprises a bimorphous rod on which the pin rests. By applying a voltage across the bimorphous rod a defelection occurs in the rod and can cause the pin to move.

In yet another embodiment of the tactile element, a piezoelectric disk is used which is disposed on the selection button. This disk can be vibrated.

Instead of the tactile element being moved upwards only once during selection, it is possible to vibrate it at a frequency of between 10 Hz and 500 Hz for the entire duration of the selection or while the cursor coincides to the special area. This is very advantageous particularly in embodiments in which a piezoelectric element is used. A frequency of about 250 Hz gives an optimum for the feel at the user's fingertips.

The invention is not restricted to the embodiments described and a skilled addressee will be able to make numerous modifications. For example, the entire selection button can be moved upwards during coincidence. The tactile elements may consist of more pins per button, which are activated uniformly. They can also be in the form of a plane or one or more linear elements.

-The mouse need not be connected to the computer system via an electrical connection. Connection may also be made, for example, by an infra-red or ultrasonic element. The tactile feedback may also be the opposite to the operation described hereinbefore. However, all these modifications and embodiments will come under the following claims.

**Claims**

1. A system comprising a computer, a display unit comprising a screen, and an inputting device (10) for selection of specific areas on the screen and for moving a cursor on said screen, the inputting device (10) being coupled to the computer in which there is at least one screen-controlled program, a program seeing to it that selectable elements are displayed on the screen at places corresponding to the specific areas, and it being possible to bring the cursor to a selectable element by means of the inputting device (10), so that a subprogram symbolized by said element can be selected by operating a selection key (13, 14) on the inputting device (10), the inputting device further comprising a tactile element to output information, characterised in that when the position of the cursor coincides with the position of a selectable element the computer delivers a signal to the inputting device (10), said output tactile element being activated in response to said signal and in that the tactile element is disposed in a selection key (13, 14).

2. A system according to claim 1 characterised in that the tactile element comprises a piezoelectric element.

3. A system according to claim 1 characterised in that the tactile element comprises an electromagnetic element.

4. A system according to any one of the preceding claims characterised in that the tactile element comprises a pin (40) which, on activation of the element, projects above the surface (44) of the inputting device (10) or selection key (13, 14).

5. A system according to any one of the preceding claims characterised in that the tactile element is vibrated for a given time during coincidence of the positions.

6. A system according to claim 5, characterised in that the vibration frequency is preferably between 10 Hz and 500 Hz.

7. A system according to claim 6, characterised in that the vibration frequency is 250 Hz.

**Patentansprüche**

1. System mit einem Computer, einer einen Bildschirm aufweisenden Anzeigeeinheit und einem Eingabegerät für die Auswahl bestimmter Bereiche auf dem Bildschirm und für die Bewegung einer Marke auf dem Bildschirm, bei dem das Eingabegerät mit dem Computer verbunden ist und wenigstens ein bildschirmgesteuertes Programm, ein Programm, das dafür sorgt, daß auswählbare Elemente auf dem Bildschirm an den bestimmten Bereichen entsprechenden Stellen dargestellt werden, vorhanden ist, wobei es möglich ist, die Marke mit Hilfe des Eingabegerätes (10) zu einem auswählbaren Element zu bringen, so daß ein durch dieses Element symbolisiertes Unterprogramm durch Betätigen einer Wähltaste (13, 14) auf dem Eingabegerät (10) ausgewählt werden kann, wobei das Eingabegerät außerdem ein taktiles Element zur Ausgabe von Informationen aufweist, dadurch gekennzeichnet, daß der Computer ein Signal an das Eingabegerät (10) übermittelt, wenn die Position der Marke mit der Position eines auswählbaren Elements zusammenfält, daß taktile Ausgabe-Element auf dieses Signal hin aktiviert wird und daß das taktile Element in einer Wähltaste (13, 14) angeordnet ist.

2. System nach Anspruch 1, dadurch gekennzeichnet, daß das taktile Element ein piezoelektrisches Element aufweist.

3. System nach Anspruch 1, dadurch gekennzeichnet, daß das taktile Element ein elektromagnetisches Element aufweist.

4. System nach einem der vorstehenden Ansprüche, dadurch gekennzeichnet, daß das taktile Element einen Stift (40) aufweist, der bei Aktivierung des Elements über die Oberfläche (44) Eingabegerätes (10) oder der Wähltaste (13, 14) hinaus vorspringt.

5. System nach einem der vorstehenden Ansprüche, dadurch gekennzeichnet, daß das taktile Element für eine bestimmte Zeit während des Zusammenfallens der Positionen zu Schwingungen erregt wird.

6. System nach Anspruch 5, dadurch gekennzeichnet, daß die Schwingungsfrequenz vorzugsweise zwischen 10 Hz und 500 Hz liegt.

7. System nach Anspruch 6, dadurch gekennzeichnet, daß die Schwingungsfrequenz 250 Hz beträgt.

**Revendications**

1. Système comprenant un ordinateur, une unité d'affichage comportant un écran, et un dispositif d'entrée (10) servant à sélectionner des zones spécifiques sur l'écran et à déplacer un curseur sur ledit écran, le dispositif d'entrée (10) étant accouplé à l'ordinateur, dans lequel il est prévu au moins un programme commandé à partir de l'écran, un programme indiquant que des éléments pouvant être sélectionnés sont affichés sur l'écran en des emplacements correspondant aux zones spécifiques, le curseur pouvant être amené sur un élément pouvant être sélectionné au moyen du dispositif d'entrée (10) de sorte qu'un sous-programme symbolisé par ledit élément peut être sélectionné au moyen de l'actionnement d'une touche de sélection (13, 14) située sur le dispositif d'entrée (10) ce dernier comprenant en outre un élément tactile servant à délivrer une information, caractérisé en ce que, lorsque la position du curseur coïncide avec la position d'un élément pouvant être sélectionné, l'ordinateur envoie un signal au dispositif d'entrée (10), ledit élément tactile de sortie étant activé en réponse audit signal, et en ce que l'élément tactile est disposé dans une touche de sélection (13, 14).

2. Système selon la revendication 1, caractérisé en ce que l'élément tactile comporte un élément piézoélectique.

3. Système selon la revendication 1, caractérisé en ce que l'élément tactile comporte un élément électromagnétique.

4. Système selon l'une quelconque des revendications précédentes, caractérisé en ce que l'élement tactile comporte une broche (40) qui, lors de l'activation de l'élément, fait saillie au-dessus de la surface (44) du dispositif d'entrée (10) ou de la touche de sélection (13, 14).

5. Système selon l'une quelconque des revendications précédentes, caractérisé en ce que l'élément tactile vibre pendant un intervalle de temps donné, pendant la coïncidence entre les positions.

6. Système selon la revendication 5, caractérisé en ce que la fréquence de vibration est de préférence comprise entre 10 Hz et 500 Hz.

7. Système selon la revendication 6 caractérisé en ce que la fréquence de vibration est égale à 250 Hz.

FIG. 1

FIG.4a

FIG.4b

FIG.2a

FIG.2b

FIG.2c

FIG.2d

FIG. 2e

FIG. 2 f

FIG.3a

FIG.3b